# EUROPEAN PATENT SPECIFICATION

(11) **EP 2 123 689 B1**
(45) Date of publication and mention of the grant of the patent: **09.03.2011**
(21) Application number: 08009315.6
(22) Date of filing: 21.05.2008
(51) Int. Cl.: C08G 59/56

(54) **Curing agents for epoxy resins**
Härter für Epoxyharze
Agents de durcissement pour résine époxy

(43) Date of publication of application: 25.11.2009
(73) Proprietor: Cognis IP Management GmbH, 40589 Düsseldorf (DE)
(72) Inventor: Sato, Setsuo, 12243-260 Sao José dos Campos - SP (BR); Bueno, Ramiro Carielo, 12328-390 Jacarei - SP (BR); Shigueru Araujo, Alexssander, 12237-000 Sao José dos Campos - SP (BR); Ferreira, Arnaldo, 12322-380 Jacarei (BR)

(56) References cited:
- EP-A- 1 788 048
- WO-A-2004/024792
- T.E.BREUER: "Dimer acids" KIRK-OTHMER ENCYLOPEDIA OF CHEMICAL TECHNOLOGY BY JOHN WILEY & SONS, INC, [Online] 4 December 2000 (2000-12-04), pages 1-13, XP002497467 DE Retrieved from the Internet: URL:http://mrw.interscience.wiley.com/emrw /9780471238966/kirk/article/dimebreu.a01/c urrent/html?hd=All,dimer&hd=All,acids> [retrieved on 2008-09-25]

## Description

### Field of the invention

The invention relates to curing agents ("hardeners") for expoxy resins. These curing agents are especially useful for low viscosity, high solid, and low VOC coating compositions with low temperature cure, good tack freee time and improved chemical resistance.

### Prior Art

Phenalkamines are still a relatively young class of epoxy resin curing agents. They are products of the reaction (condensation products) of cardanol (I), which, chemically, is a C₁₅-alkylphenol and a major constituent of the oil obtainable from cashew nut shells (CNSL = cashew nut shell liquid), with aliphatic (primary or secondary) amines and formaldehyde.

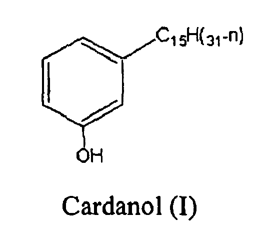

WO 2004/024792 A1 discloses coating compositions comprising a film forming polymer comprising an epoxide polymer, a mixture of crosslinking agents and pigments. The mixture of crosslinking agents comprises (a) at least one polyamide functional compound and (b) at least one phenalkamine compound.

Phenalkamines (b) are - as known by the skilled man - Mannich bases: the reaction product of of an aldehyde, such as formaldehyde, amine and a phenolic compound (see WO 2004/024792 A1, page 3, lines 16-18); useful amines include ethylenediamine (EDA) and diethyltriamine (DETA) (see WO 2004/024792 A1, page 3, lines 18-19); the phenolic compound is a cardanol-containing extract derived from cashew nutshell liquid (see WO 2004/024792 A1, page 3, lines 19-20).

Polyamides (a) are based on the reaction product of dimerized fatty acid with polyamine, preferably difunctional polyamines (see WO 2004/024792 A1, page 4, lines 4 - 6); preferably the amides are formed by a condensation reaction and the polyamide may be solid, like a wax or liquid (see WO 2004/024792 A1, page 4, lines 11-12); the polyamides (b) preferably have an amine value of 159 - 175 mg KOH/g (see WO 2004/024792 A1, page 4, line 13).

### Description of the Invention

The problem addressed by the present invention was to develop novel curing agents ("hardeners") for expoxy resins. These curing agents should be useful for low viscosity, high solid, and low VOC coating compositions with low temperature cure, good tack freee time and improved chemical resistance.

The subject matter of the present invention are hardener compositions for epoxy resins (= epoxy resin curing agent composition) comprising a mixture of crosslinking agents comprising
(a) at least one polyamide functional compound, which has at least one amide function and at least one amine function per molecule, with the proviso that the polyamide (a) is obtainable by the reaction of a dimer fatty acid or an alkylester of a dimer fatty acid with at least one polyamine, and
(b) at least one phenalkamine compound, which is the condensation product of cardanol, formaldehyde and one ore more at least difunctional amines,
   with the proviso that the dimer fatty acid building block used to obtain the polyamide functional compound (a) comprises the monomeric fatty acid building block in an amount of 20 - 60 % by weigth (based on the total amount of the dimer fatty acid building block).

### Dimer and Monomer fatty acids

As the skilled man is aware, dimer fatty acids are carboxylic acids obtainable by oligomerization of unsaturated carboxylic acids, generally fatty acids, such as oleic acid, linoleic acid, erucic acid and the like. The oligomerization is normally carried out at elevated temperature in the presence of a catalyst, for example of clay.

The substances obtained - technical-quality dimer fatty acids - are mixtures in which the dimerization products predominate. However, the mixtures also contain small amounts of monomers (the sum total of monomers in the crude mixture of the dimer fatty acids is referred to by the expert as "monomer fatty acids") and higher oligomers, more especially the so-called "trimer fatty acids". Dimer fatty acids are commercially available products and are available in various compositions and qualities (for example under the name of Empol®, a product of the applicant).

As already mentioned, the monomeric compounds present in the mixture for the production of dimer fatty acids after the reaction has been carried out and obtainable therefrom by distillation-based processes are normally referred to by the expert as monomer fatty acids. The monomer fatty acids are not unreacted starting material of the process for producing dimer fatty acids, but rather products of a secondary reaction containing small amounts of unreacted starting material. The secondary reaction leads to a structural modification of the fatty acids used.

The composition of the monomer fatty acids is subject to certain variations in regard to the nature of the starting materials used in the production of the dimer fatty acids. For example, the content of compounds containing aromatic structural elements in the monomer fatty acids is particularly pronounced when linoleic acid is predominantly used as starting material.

Monomer fatty acids obtainable in the production of dimer fatty acids using either oleic acid or linoleic acid or a mixture of oleic and linoleic acid (for example in the form of the so-called tall oil fatty acids) as starting material are particularly preferred for the purposes of the present invention.

Within the present invention the term "dimer fatty acid" is used for mixtures comprising monomer, dimer and trimer fatty acid as axplained above. Consequently, if the content of monomer fatty acids in dimer fatty acid is mentioned in the present invention, this means % by weight of the monomeric fatty acids based on the total of the "dimeric fatty acid" (the mixture of the mono-, di- and tri-species as explained above).

### The polyamide functional compound (a)

As mentioned above the polyamide functional compound (a) has at least one amide function and at least one primary and/or secondary amine function per molecule, and is obtainable by the reaction of a dimer fatty acid or an alkylester of a dimer fatty acid with at least one polyamine. Furthermore the dimer fatty acid building block used to obtain this polyamide functional compound (a) comprises monomeric fatty acid building block in an amount of 20 - 60 % by weigth (based on the total amount of the dimer fatty acid building block).

The amine functions of (a) can be primary (NH₂) and/or secondary (NH). Due to the fact that compound (a) contains at least one amine function, these compounds (a) can be characterized by an amine value.

In a preferred embodiment the dimer fatty acid building block used to obtain this polyamide functional compound (a) comprises monomeric fatty acid building block in an amount of 30 - 50 % by weigth (based on the total amount of the dimer fatty acid building block).

The polyamine used to obtain the polyamide functional compound (a) can be derived from any linear, branched, cyclic, aromatic or aliphatic polyamine. It has to be understood that the term polyamine also includes diamines.

In one embodiment the polyamine used to obtain the polyamide functional compound (a) is a diamine or a mixture of diamines. In a preferred embodiment the diamines are chosen from the group ethylenediamine (EDA), diethylenetriamine (DETA), triethylenetetramine (TETA), tetraethylenepentamine (TEPA), m-xylylendiamine (MXDA), Isophorone diamine.

In a further preferred embodiment a mixture of TETA and TEPA is used as diamine mixture.

### The phenalkamine compound (b)

As mentioned above the phenalkamine compound (b) is the condensation product of an alkyl phenol, formaldehyde and one ore more at least difunctional amines. Preferably the alkyl phenol has 3 to 17 carbon atoms (especially 13 to 15 carbon atoms) and can be saturated or unsaturated. Moreover the alkyl phenol may have additional methyl and/or OH-groups. Cardanol is preferred as alkyl phenol. Cardanol is known to the skilled man and also defined by the formula (I) above. In one embodiment a Cardanol is used which is obtained from Cashew Nut Shell Liquid (CNSL) extract.

The phenalkamine compound (b) can be derived from any linear, branched, cyclic, aromatic or aliphatic polyamine. It has to be understood that the term polyamine also includes diamines.

In one embodiment the polyamine used to obtain the phenalkamine compound (b) is a diamine or a mixture of diamines. In a preferred embodiment the diamines are chosen from the group ethylenediamine (EDA), diethylenetriamine (DETA), triethylenetetramine (TETA), tetraethylenepentamine (TEPA), m-xylylendiamine (MXDA), Isophorone diamine.

In a further preferred embodiment a mixture of TETA and TEPA is used as diamine mixture.

### Advantages

The advantages achieved with the epoxy hardener composition - mixture of components (a) and (b) - of the present invention are:
- low viscosity at 20 °C, decreasing the need of solvents to adjust viscosity for application
- useful for low VOC coatings
- low temperature curing performance
- improved tack free time
- excellent chemical resistance.

It has to be understood that the mixture of compounds (a) and (b) of the present invention is a synergistic mixture, which means that the effects of the epoxy hardener comprising (a) and (b) are better compared to (a) and (b) alone.

In one embodiment the mixture of (a) and (b) comprises 5 to 95% of (a) 95% and 5% (b). In a preferred embodiment the mixture of (a) and (b) comprises 65 to 75% of (a) 35% and 25% (b).

Mixtures of compounds (a) and (b), in which compounds (b) are based on TETA and TEPA mixtures as diamine building block, show good properties in formulations which also contain epoxy resins and pigments - in so far as sedimentation and cloudness during storage is not observed.

### Examples

### Example 1: Dimer Fatty Acid Methyl Ester with high monomers content

In a 50 liters multipurpose reactor, 40 kg (135,5 moles) of soy methyl esters with a typical soy fatty acid distribution, 3,2 kg of clay, 0,14kg (3,33 moles) of lithium hydroxide monohydrated were added to the reactor. Nitrogen purge was carried out during 5 minutes, reactor was closed and heated up to 260°C in 1 hour. After reaching 260 - 270 °C pressure was kept at 6 bars using a pressure control valve, reactor was held in this condition during 2 hours to complete dimerization reaction. Temperature was lowered to 150°C and 0,7 kg(6,07moles) of H₃PO₄ 85% was added to split the lithium soaps during 1 hour. Filtration was done using a conventional press filter to remove clay, catalyst and any other solid material.
38,4kg of methyl dimers having 38% C18 monobasic fatty acid methyl esters, 46,5% of C36 dibasic fatty acid methyl esters, 15,5% of C54 tribasic fatty acid methyl esters, Gardner color = 3,0, acid value = 15 mgKOH/g, and saponification value = 195 mg KOH/g, viscosity at 25°C = 80 cps were obtained at the end of the above described process.

### Example 2: Low viscosity liquid Polyamide (a)

In a 50 liter multipurpose reactor, 26,34 kg (86,86 moles) of dimers fatty acid methyl ester (from example 1), 11,83 kg (81,03 moles) kg of TETA, 1,83 kg (9,68 moles) of TEPA were added. Nitrogen purge was carried out for 5 minutes, then the temperature was set to 100 °C. After reaching 100°C, the temperature was increased to 205 °C in 2 hours. Vacuum of 650 mmHg pressure (relative) was applied during 30 minutes and the final product was cooled and discharged. Analysis: Gardner color = 6; Amine value = 381,9 mg KOH/g; Brookfield Viscosity at 25°C = 3157 cps.

### Example 3 - Alkyl Phenol formaldehyde amine condensate = Phenalkamine (b)

In a 50 liter multi purpose reactor, 11,16 kg (37,2mols) of C15 alkylphenol produced from Cashew Nut Shell Liquid through Short Path Disitillation technique having 90% of C15 alkyl phenol isomers (commercially known as Cardanols) and 10% of C15 alkyl di-hydroxy phenol isomers (Cardols), 2,12 kg (70,7 mols) of paraformaldehyde were charged to the reactor. 3,8 kg (63,8 mols) of Ethylenediamine was added slowly during 2hours cooling the reactor to keep the temperature at 80 °C at the maximum. Temperature was increased to 115 °C and than reacted during 1 hour, reactor was cooled down to 90 °C and water was distilled off using 650 mmHg of pressure. About 1,5 kg of distillate were obtained.
14,1 kg of epoxy curing agent were obtained at the end with Gardner color = 16, Amine Value = 287 mg KOH/g, viscosity Brookfield F2/10rpm at 25C = 3080cps.

### Example 4: Epoxy curing agent: synergistic blend of (a) and (b)

In a 50 liter jacked reactor, 27 kg of liquid polyamide according to example 2 were added and heated until reach 60 °C, under mixing and nitrogen flow. 9 kg of alkylphenol formaldehyde amine condensate (according to example 3) were added to the reactive liquid polyamide and mixed for 30 minutes. The resulting final mixture is a liquid resin that was used in application trials.
Analytical results: Gardner color = 14; Amine Value = 357,0 mgKOH/g; Brookfield Viscosity at 25 °C = 5920 cps.

### Example 5: Coating formulation using Epoxy curing agent (synergistic blend of Example 4)

| PART-A | |
|---|---|
| Red epoxy primer: | |
| Genepoxy 190 (standard liquid epoxy)¹⁾ | 27% |
| Genepoxy 525/75X (solid epoxy resin in xylene)¹⁾ | 8% |
| Reactive diluents (alkyl glycidyl ether)²⁾ | 2% |
| Perenol S5 (slip agent)¹⁾ | 0,15% |
| Zinc phosphate | 12% |
| Xylene | 1,65% |
| Baryte | 27% |
| Iron Oxide (red pigment) | 8% |
| Quartz # 400 | 10% |
| Claytone APA (modified clay)³⁾ | 0,5% |
| Rilanit Plus (rheologic agent)¹⁾ | 0,3% |
| Perenol E8 (air-release agent)¹⁾ | 0,4 |
| iso-Butanol (solvent) | 3% |
| *(solidslvolume = 85,3%); specific gravity = 1,80 glcm³* | |

| PART-B | |
|---|---|
| Xylene | 17,5% |
| Epoxy curing agent (synergistic blend of Example 4) | 77% |
| Capcure EH 30 (accelerator)¹⁾ | 5,55% |
| *(solidslvolume = 80%); specific gravity = 0,96 g*/*cm³* | |

| | |
|---|---|
| Suppliers: 1)=Cognis; 2)=Huntsman; 3)=Southern Clay Products Inc. | |

### PROPERTIES OF THE FORMULATION:

Mixture ratio
By weight: 9g of Part-A, 1g of Part-B
By volume: 5parts of Part-A, 1 part of Part-B

### MIXTURE CHARACTERISTICS :

| | |
|---|---|
| Specific gravity (g/cm³) | 1,66 |
| Solids (Volume) | 84,4 |
| Pot life at 250 °C(minutes) | 470 |
| Set-to-touch at 250°C (hours) | 16 |
| Hard dry at 250 °C (hours) | 36 |
| Viscosity at 250°C (KU) | 103 |
| Gloss at 60 °C | 70,5 |

### Chemical resistance against:

| | |
|---|---|
| Sulfuric acid (10%) | OK |
| Propylene glycol methyl ether | OK |
| Xylene | OK |
| Water | OK |
| Sodium hydroxide 10% | OK |

## Claims

1. Hardener compositions for epoxy resins (= epoxy resin curing agent composition) comprising a mixture of crosslinking agents comprising
(a) at least one polyamide functional compound, which has at least one amide function and at least one primary and/or secondary amine function per molecule, with the proviso that the polyamide (a) is obtainable by the reaction of a dimer fatty acid or an alkylester of a dimer fatty acid with at least one polyamine, and
(b) at least one phenalkamine compound, which is the condensation product of an alkyl phenol, formaldehyde and one ore more at least difunctional amines,
with the proviso that the dimer fatty acid building block used to obtain the polyamide functional compound (a) comprises the monomeric fatty acid building bock in an amount of 20 - 60 % by weigth (based on the total amount of the dimer fatty acid).

2. Compositions according to claim 1, with the proviso that the dimer fatty acid building block used to obtain the polyamide functional compound (a) comprises the monomeric fatty acid building block in an amount of 30 - 50 % by weigth (based on the total amount of the dimer fatty acid building block).

3. Compositions according to claim 1 or 2, wherein the polyamine is chosen from the group ethylenediamine (EDA), diethylenetriamine (DETA), triethylenetetramine (TETA), tetraethylenepentamine (TEPA), m-xylylendiamine (MXDA) and Isophorone diamine.

4. Compositions according to claim 3, wherein the polyamine is a mixture of TETA and TEPA.

5. Compositions according to claims 1 to 4, wherein the alkyl phenol building block of the phenalkamine (b) has 3 to 17 carbon atoms.

6. Compositions according to claim 5, wherein the alkyl phenol building block of the phenalkamine (b) is Cardanol.

7. Compositions according to claim 6, wherein Cardanol is obtained from Cashew Nut Shell Liquid (CNSL) extract.

8. Compositions according to claims 1 to 7, wherein the at least difunctional amine building block of the phenalkamine (b) is chosen from the group ethylenediamine (EDA), diethylenetriamine (DETA), triethylenetetramine (TETA), tetraethylenepentamine (TEPA), m-xylylendiamine (MXDA), Isophorone diamine.

9. Compositions according to claim 8, wherein the difunctional amine building block is a mixture of TETA and TEPA.

## Patentansprüche

1. Epoxidharzhärter-Zusammensetzungen enthaltend eine Mischung von Vernetzern enthaltend
(a) wenigstens eine Polyamid-funktionelle Verbindung, die wenigstens eine Amidfunktion aufweist und wenigstens eine primäre und/oder sekundäre Aminfunktion pro Molekül, mit der Maßgabe, dass das Polyamid (a) erhältlich ist durch Umsetzung einer Dimerfettsäure oder eines Alkylesters einer Dimerfettsäure mit wenigstens einem Polyamin, und
(b) wenigstens eine Phenalkamin-Verbindung, die das Kondensationsprodukt eines Alkylphenols, Formaldehyd und ein oder mehreren wenigstens difunktionellem Aminen ist,
mit der Maßgabe, dass der Dimerfettsäure-Baustein, der eingesetzt wird, um die Polyamid-funktionale Verbindung (a) zu erhalten, den Monomerfettsäure-Baustein in einer Menge von 20 - 60 Gew.-% (bezogen auf die gesamte Menge an Dimerfettsäure) enthält.

2. Zusammensetzung nach Anspruch 1, mit der Maßgabe, dass der Dimerfettsäure-Baustein, der zur Herstellung der Polyamid-funktionellen Verbindung (a) eingesetzt wird, den Monomerfettsäure-Baustein in einer Menge von 30 - 50 % Gew.-% (bezogen auf die Gesamtmenge des Dimerfettsäure-Bausteins) enthält.

3. Zusammensetzung nach Anspruch 1 oder 2, wobei das Polyamin ausgewählt wird aus der gruppe Ethylenediamin (EDA), Diethylenetriamin (DETA), Triethylenetetramin (TETA), Tetraethylenepentamin (TEPA), m-Xylylendiamin (MXDA) and Isophorondiamin.

4. Zusammensetzung nach Anspruch 3, wobei das Polyamin eine Mischung von TETA und TEPA ist.

5. Zusammensetzung nach den Ansprüchen 1 bis 4, wobei der Alkyphenol-Baustein des Phenalkamins (b) 3 bis 17 C-Atome aufweist.

6. Zusammensetzung nach Anspruch 5, wobei der Alkyphenol-Baustein des Phenalkamins (b) Cardanol ist.

7. Zusammensetzung nach Anspruch 6, wobei Cardanol aus Cashew Nut Shell Liquid (CNSL) Extract stammt.

8. Zusammensetzung nach den Ansprüchen 1 bis 7, wobei wenigstens ein difunktioneller Aminbaustein (b) ausgewählt wird aus der Gruppe Ethylenediamin (EDA), Diethylenetriamin (DETA), Triethylenetetramin (TETA), Tetraethylenepentamin (TEPA), m-Xylylendiamin (MXDA), Isophorondiamin.

9. Zusammensetzung nach Anspruch 8, wobei der difunktionelle Aminbaustein eine Mischung von TETA und TEPA ist.

## Revendications

1. Compositions de durcissement pour résines époxy (= composition d'agent de durcissement pour résines époxy) comprenant un mélange d'agents de réticulation qui comprend
(a) au moins un composé fonctionnel polyamide, qui comprend au moins une fonction amide et au moins une fonction amine primaire et/ou secondaire par molécule, à condition que le polyamide (a) puisse être obtenu par la réaction d'un acide gras dimère ou d'un ester alkylique d'un acide gras dimère avec au moins une polyamine, et
(b) au moins un composé de phénalkamine, qui est le produit de condensation d'un alkylphénol, de formaldéhyde et d'une ou de plusieurs amines au moins bifonctionnelles,
à condition que le synthon acide gras dimère utilisé pour obtenir le composé fonctionnel polyamide (a) comprenne le synthon acide gras monomère en une quantité de 20 à 60 % en poids (par rapport à la quantité totale de l'acide gras dimère).

2. Compositions selon la revendication 1, à condition que le synthon acide gras dimère utilisé pour obtenir le composé fonctionnel polyamide (a) comprenne le synthon acide gras monomère en une quantité de 30 à 50 % en poids (par rapport à la quantité totale du synthon acide gras dimère).

3. Compositions selon la revendication 1 ou 2, dans lesquelles la polyamine est choisie dans le groupe éthylènediamine (EDA), diéthylènetriamine (DETA), triéthylènetétramine (TETA), tétraéthylènepentamine (TEPA), m-xylylènediamine (MXDA) et isophoronediamine.

4. Compositions selon la revendication 3, dans lesquelles la polyamine est un mélange de TETA et de TEPA.

5. Compositions selon les revendications 1 à 4, dans lesquelles le synthon alkylphénol de la phénalkamine (b) contient 3 à 17 atomes de carbone.

6. Compositions selon la revendication 5, dans lesquelles le synthon alkylphénol de la phénalkamine (b) est le cardanol.

7. Compositions selon la revendication 6, dans lesquelles le cardanol est obtenu à partir d'un extrait de baume de cajou (CNSL).

8. Compositions selon les revendications 1 à 7, dans lesquelles le synthon amine au moins bifonctionnelle de la phénalkamine (b) est choisi dans le groupe éthylènediamine (EDA), diéthylènetriamine (DETA), triéthylènetétramine (TETA), tétraéthylènepentamine (TEPA), m-xylylènediamine (MXDA) et isophoronediamine.

9. Compositions selon la revendication 8, dans lesquelles le synthon amine bifonctionnelle est un mélange de TETA et de TEPA.
